(19) Europäisches Patentamt / European Patent Office / Office européen des brevets

(11) **EP 3 602 081 B1**

(12) **EUROPÄISCHE PATENTSCHRIFT**

(45) Veröffentlichungstag und Bekanntmachung des Hinweises auf die Patenterteilung:
**18.10.2023 Patentblatt 2023/42**

(21) Anmeldenummer: **18714195.7**

(22) Anmeldetag: **22.03.2018**

(51) Internationale Patentklassifikation (IPC):
**G01Q 40/00** (2010.01)  **G01Q 60/32** (2010.01)
**G01Q 60/36** (2010.01)

(52) Gemeinsame Patentklassifikation (CPC):
**G01Q 40/00; G01Q 60/32; G01Q 60/363;
G01Q 60/366**

(86) Internationale Anmeldenummer:
**PCT/EP2018/057226**

(87) Internationale Veröffentlichungsnummer:
**WO 2018/172438 (27.09.2018 Gazette 2018/39)**

(54) **VERFAHREN ZUM KALIBRIEREN EINER SPITZE EINES RASTERKRAFTMIKROSKOPS**

METHOD OF CALIBRATION OF A TIP OF AN ATOMIC FORCE MICROSCOPE

MÉTHODE DE CALIBRATION D'UNE POINTE POUR UN MICROSCOPE À FORCE ATOMIQUE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **24.03.2017 DE 102017205049**

(43) Veröffentlichungstag der Anmeldung:
**05.02.2020 Patentblatt 2020/06**

(73) Patentinhaber: **Fraunhofer-Gesellschaft zur Förderung
der angewandten Forschung e.V.
80686 München (DE)**

(72) Erfinder:
- **GLUCH, Jürgen
  01109 Dresden (DE)**
- **KOPYCINSKA-MÜLLER, Malgorzata
  01109 Dresden (DE)**
- **KÖHLER, Bernd
  01259 Dresden (DE)**
- **RABE, Ute
  66119 Saarbrücken (DE)**

(74) Vertreter: **Pfenning, Meinig & Partner mbB
Patent- und Rechtsanwälte
An der Frauenkirche 20
01067 Dresden (DE)**

(56) Entgegenhaltungen:
- **KOPYCINSKA-MUELLER M ET AL: "Study of mechanical behavior of AFM silicon tips under mechanical load", NANOTECHNOLOGY, IOP, BRISTOL, GB, Bd. 27, Nr. 45, 3. Oktober 2016 (2016-10-03), Seite 454001, XP020310373, ISSN: 0957-4484, DOI: 10.1088/0957-4484/27/45/454001 [gefunden am 2016-10-03] in der Anmeldung erwähnt**
- **ROSENBERGER M R ET AL: "Contact stiffness calibration platform for nanomechanical property measurements with contact resonance atomic force microscopy", 2015 TRANSDUCERS - 2015 18TH INTERNATIONAL CONFERENCE ON SOLID-STATE SENSORS, ACTUATORS AND MICROSYSTEMS (TRANSDUCERS), IEEE, 21. Juni 2015 (2015-06-21), Seiten 1235-1238, XP033189510, DOI: 10.1109/TRANSDUCERS.2015.7181153 [gefunden am 2015-08-05]**
- **RABE U ET AL: "IMAGING AND MEASUREMENT OF LOCAL MECHANICAL MATERIAL PROPERTIES BY ATOMIC FORCE ACOUSTIC MICROSCOPY", SURFACE AND INTERFACE ANALY, HEYDEN AND SON, LONDON, GB, Bd. 33, Nr. 2, 1. Februar 2002 (2002-02-01), Seiten 65-70, XP008034988, ISSN: 0142-2421, DOI: 10.1002/SIA.1163 in der Anmeldung erwähnt**

- **KOPYCINSKA-MULLER M ET AL: "Contact mechanics and tip shape in AFM-based nanomechanical measurements", ULTRAMICROSCOPY, ELSEVIER, AMSTERDAM, NL, Bd. 106, Nr. 6, 1. April 2006 (2006-04-01) , Seiten 466-474, XP027887488, ISSN: 0304-3991 [gefunden am 2006-04-01] in der Anmeldung erwähnt**
- **D. PASSERI ET AL: "On the tip calibration for accurate modulus measurement by contact resonance atomic force microscopy", ULTRAMICROSCOPY, Bd. 128, 1. Mai 2013 (2013-05-01), Seiten 32-41, XP055479687, NL ISSN: 0304-3991, DOI: 10.1016/j.ultramic.2013.02.003 in der Anmeldung erwähnt**
- **A. M. JAKOB ET AL: "Nanoscale-resolved elasticity: contact mechanics for quantitative contact resonance atomic force microscopy", NANOSCALE, Bd. 6, Nr. 12, 1. Januar 2014 (2014-01-01) , Seiten 6898-6910, XP055479688, United Kingdom ISSN: 2040-3364, DOI: 10.1039/C4NR01034E in der Anmeldung erwähnt**
- **STAN GHEORGHE ET AL: "Quantitative measurements of indentation moduli by atomic force acoustic microscopy using a dual reference method", REVIEW OF SCIENTIFIC INSTRUMENTS, AIP, MELVILLE, NY, US, Bd. 77, Nr. 10, 17. Oktober 2006 (2006-10-17), Seiten 103707-103707, XP012092358, ISSN: 0034-6748, DOI: 10.1063/1.2360971 in der Anmeldung erwähnt**
- **BATOG G S ET AL: "Calculation of the thicknesses and elastic properties of thin-film coatings using atomic-force acoustic microscopy data", TECHNICAL PHYSICS, NAUKA/INTERPERIODICA, MO, Bd. 51, Nr. 8, 1. August 2006 (2006-08-01) , Seiten 1084-1089, XP019412933, ISSN: 1090-6525, DOI: 10.1134/S1063784206080196 in der Anmeldung erwähnt**

**Beschreibung**

Die vorliegende Erfindung betrifft ein Verfahren zum Kalibrieren einer Spitze eines Rasterkraftmikroskops.

Es existieren mehrere Methoden, die es erlauben, basierend auf dem Prinzip der Rasterkraftmikroskopie (atomic force microscopy, AFM), ein Elastizitätsmodul (Young's modulus) einer Probe im Nanobereich zu bestimmen. Diese Methoden benötigen jedoch Literaturwerte oder Resultate weiterer Messungen wie Nanoindentierung oder Ultraschallverfahren, um ihre Ergebnisse zu stützen. Dies ist in erster Linie im Fehlen einer allgemein anerkannten Methode zum Kalibrieren einer Geometrie eine Spitze eines Rasterkraftmikroskops begründet.

Beispielsweise ist in Rosenberger M. R. et al.: "Contact stiffness calibration platform for nanomechanical property measurements with contact resonance atomic force microscoe", 2015 Transducers - 2015 18th International Conference on Solid-State Sensors, Actuators and Microsystems (TRANSDUCERS), IEEE, 21. Juni 2015 (2015-06-21), Seiten 1235-1238, XP033189510, DOI: 10.1109/TRANSDUCERS.2015.7181153, ein Kalibrierungsverfahren beschrieben, das auf einem Zwei-Feder-Modell beruht, aber mehr als zwei Referenzproben zum Bestimmen der Kontaktsteifigkeit verwendet.

Diese und eine Vielzahl anderer existierender Methoden lässt die spezifische Geometrie der Spitze außer Acht, so dass auch die Kalibrierung entsprechend mit Fehlern behaftet ist.

Der vorliegenden Erfindung liegt daher die Aufgabe zugrunde, ein Verfahren vorzuschlagen, das die genannten Nachteile vermeidet, mit dem also eine Kalibrierung einer Spitze eines Rasterkraftmikroskops zeitlich effizient und mit hoher Genauigkeit vorgenommen werden kann.

Diese Aufgabe wird erfindungsgemäß gelöst durch ein Verfahren nach Anspruch 1. Vorteilhafte Ausgestaltungen und Weiterbildungen sind in den abhängigen Ansprüchen beschrieben.

Bei einem Verfahren zum Kalibrieren einer Spitze eines Rasterkraftmikroskops wird zunächst eine Steifigkeit-Kraft-Kurve einer Referenzprobe mit bekannten mechanischen Eigenschaften mit der zu kalibrierenden Spitze aufgenommen. Anschließend wird der Kehrwert der Steifigkeit-Kraft-Kurve gebildet, wobei der Kehrwert als eine Summe aus dem Kehrwert der Steifigkeit nach dem Modell von Batog und einem weiteren Kehrwert der Steifigkeit, der von Oberflächenunebenheiten der Spitze abhängt, gebildet wird. Es wird eine Ausgleichsrechnung mit dem Kehrwert der aufgenommenen Steifigkeit-Kraft-Kurve mit der Steifigkeit nach dem Modell von Batog und einem Vorfaktor, der in den Kehrwert der Steifigkeit, der von Oberflächenunebenheiten der Spitze abhängt, eingeht, als Parameter durchgeführt und abschließend ein Radius der Spitze und die Spitzensteifigkeit berechnet.

Durch das Aufnehmen der Steifigkeit-Kraft-Kurve, die auch als "load-unload-curve" bezeichnet wird, kann ein reduziertes Elastizitätsmodul erhalten werden. Unter der "Steifigkeit-Kraft-Kurve" soll hierbei insbesondere jede Messung verstanden werden, bei der zunächst mit zunehmender, dann mit abnehmender Kraft auf die Probe gearbeitet wird. Das aus der Publikation G.S. Batog, A.S. Baturin, V.S. Bormashov, and E.P. Sheshin, Technical Physics 51, 1084 (2006) bekannte Modell von Batog ermöglicht eine Kalibrierung der Probe, bei der die Abmessungen der Spitze berücksichtigt werden und definiert hierbei auch die Steifigkeit nach dem Modell von Batog in der Form $\frac{1}{k^*} = \frac{1}{k_{sam}} + \frac{1}{k_{tip}}$ . Durch den zusätzlichen Term des Kehrwerts der Steifigkeit, der von Oberflächenunebenheiten der Spitze abhängt, werden genau diese Oberflächenunebenheiten ebenfalls berücksichtigt und die Kalibrierung entsprechend verfeinert.

Indem die Ausgleichsrechnung, die auch als Fit bezeichnet wird, durchgeführt wird, können die zur Berechnung des Radius der Spitze, insbesondere für bestimmte Spitzengeometrien (flache Spitze mit dreifacher oder vierfacher Symmetrie), und der Spitzensteifigkeit benötigten Parameter ermittelt werden, wobei der Radius der Spitze nach der Kalibrierung in um die Oberflächenunebenheiten bzw. Oberflächenrauigkeit korrigierter Fassung vorliegt.

Die Steifigkeit, die von Oberflächenunebenheiten der Spitze abhängt, kann anhand einer Formel $\frac{1}{k_{ma}} = \frac{1}{BE_{sam}^{*(1-m)}F^m}$ berechnet werden. Vorzugsweise wird diese Steifigkeit anhand einer Formel $\frac{1}{k_{ma}} = \frac{1}{BE_{sam}^{*2/3}F^{1/3}}$ berechnet. In dieser Formel bezeichnet $B$ den Vorfaktor, der eine Summe von kugelförmigen Oberflächenrauigkeiten kennzeichnet, $E_{sam}^*$ das reduzierte Elastizitätsmodul der Probe und $F$ die aufgebrachte Kraft. Durch die Gewichtung mit der Potenz m (was die Geometrie der Oberflächenrauigkeiten kennzeichnet) bzw. *(1-m)* wird eine entsprechende Spezifizierung vorgenommen, so dass Oberflächenunebenheiten der Spitze bzw. der Oberfläche bei der Kalibrierung berücksichtigt werden.

Vorzugsweise wird der Radius der Spitze, der auch als Spitzenradius bezeichnet werden kann, mittels einer Formel $a = K\left(\frac{1}{2M_{ref}} + \frac{1}{0.611E_{tip}}\right)$ berechnet. *K* bezeichnet hierbei die Steifigkeit nach dem Modell von Batog (und wird auch als makroskopische Steifigkeit bezeichnet). $M_{ref}$ ist das Indentationsmodul der Referenzprobe und $E_{tip}$ das Elas-tizitätsmodul der Spitze. Für homogene und isotrope Werkstoffe ist das Indentationsmodul typischerweise definiert durch

$$M = \frac{E}{1-\nu^2}$$, wobei *v* die Poissonzahl bezeichnet und E das Elastizitätsmodul ist. Für anisotrope Werkstoffe kann durch Mittelwertbildung das Indentationsmodul in ähnlicher Weise definiert sein.

Zur zeiteffizienten Durchführung des Kalibrierverfahrens kann die Steifigkeit-Kraft-Kurve an einer einzigen Referenzprobe gemessen und ausgewertet werden. Das beschriebene Kalibrierverfahren kann angewandt werden für jede Messung, die eine Steifigkeit-Kraft-Kurve liefert.

Eine Kontaktsteifigkeit wird vorzugsweise als Funktion der aufgebrachten Kraft, vorzugsweise unter Zugrundelegung des Hookeschen Gesetzes, berechnet, bevor der Kehrwert der Steifigkeit-Kraft-Kurve gebildet wird. Dies kann in vorteilhafter Weise durch eine Kombination der Bernoulli-Gleichung und der Methode von Saders geschehen, wie in M. Kopycinska-Müller, R.H. Geiss, D.C. Hurley, "Contact Mechanics and tip shape in AFM-based nanomechanical measurements", Ultramicroscopy 106, 466 (2006) beschrieben.

Typischerweise wird aus der Steifigkeit-Kraft-Kurve eine Geometrie der Spitze bestimmt.

Nach dem Kalibrieren kann das beschriebene Verfahren auch zum Vermessen einer bislang in ihren mechanischen Eigenschaften unbekannten Probe verwendet werden. Mit der nun kalibrierten Spitze wird hierzu eine Steifigkeit-Kraft-Kurve mit der unbekannten Probe, also auf bzw. an der unbekannten Probe, aufgenommen, ein Kehrwert der Steifigkeit-Kraft-Kurve gebildet und unter Benutzen der Kalibrierung eine Ausgleichsrechnung des Kehrwerts der Steifigkeit-Kraft-Kurve durchgeführt. Es ist auch möglich, eine entsprechende Messung mit den nun bekannten Parametern durchzuführen bei einer vorgegebenen bzw. bekannten Kraft.

Eine Vorrichtung zum Durchführen des beschriebenen Verfahrens nach Anspruch 8 weist ein Rasterkraftmikroskop zum Aufnehmen der Steifigkeit-Kraft-Kurve und eine Recheneinheit zum Bilden des Kehrwerts der Steifigkeit-Kraft-Kurve und zum Erstellen der Ausgleichsrechnung sowie Berechnen des Radius der Spitze und der Spitzensteifigkeit auf.

Ein Computerprogrammprodukt nach Anspruch 9 weist eine auf einem maschinenlesbaren Träger gespeicherte Befehlsfolge zum Durchführen des beschriebenen Verfahrens und/oder zum Ansteuern der beschriebenen Vorrichtung, wenn das Computerprogrammprodukt auf einer Recheneinheit abläuft.

Ausführungsbeispiele der Erfindung sind in den Zeichnungen dargestellt und werden nachfolgend anhand der Figuren 1 bis 7 erläutert.

Es zeigen:

Fig. 1     eine schematische Darstellung des Hertz-Modells;
Fig. 2     eine Fig. 1 entsprechende Darstellung eines Kalibrierverfahrens mit zwei Referenzproben;
Fig. 3     eine Fig. 1 entsprechende Darstellung eines Kalibrierverfahrens nach dem Modell von Batog (ebenfalls mit zwei Referenzproben);
Fig. 4     eine Fig. 1 entsprechende Darstellung des erfindungsgemäßen Kalibrierverfahrens;
Fig. 5     ein Diagramm einer Messkurve mit Ausgleichsrechnung an einer Referenzprobe;
Fig. 6     eine Fig. 5 entsprechende Darstellung einer Messkurve einer unbekannten Probe und
Fig. 7     eine schematische Ansicht eines Rasterkraftmikroskops.

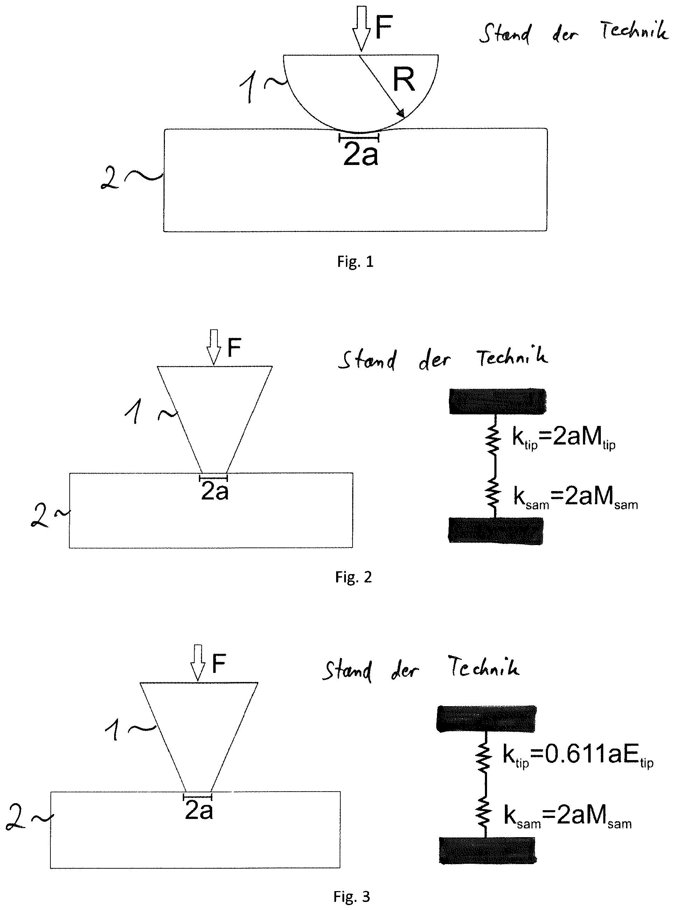

In Figur 1 ist in einer schematischen seitlichen Ansicht das Hertz-Modell der Kontaktmechanik dargestellt.

Es gibt mehrere Möglichkeiten der Kalibrierung einer Spitze eines Rasterkraftmikroskops und jede hat verschiedene Nachteile. Oftmals wird eine Referenzprobe mit bekannten mechanischen Eigenschaften verwendet, wobei die Auswahl dieser Referenzprobe von der Art und den vermuteten Eigenschaften einer zu vermessenden unbekannten Probe abhängt. Beispielsweise werden QNM-Modi für Polymerproben oder biologische Proben verwendet, wobei oftmals Polystyren zur Kalibrierung benutzt wird. Andererseits werden bei Verfahren wie "atomic force acoustic microscopy (AFAM) und "contact resonance force micropscopy (CR-FM)" häufig Quarzglas- oder Siliziumdioxidproben mit einem Elastizitätsmodul von ungefähr 80 GPa verwendet.

Bei dem in Figur 1 dargestellten Modell von Hertz wird angenommen, dass eine Spitze 1 eines Rasterkraftmikroskops eine perfekte Kugel oder Halbkugel mit einem Radius *R* ist und dass die Bedingungen eines Kontakts zwischen der Spitze 1 und einer Probe 2 die Annahmen des Hertz-Modells erfüllen. Die elastischen Eigenschaften der Spitze 1 sind durch das sogenannten Indentationsmodul $M_{tip}$ beschrieben. Die Spitze 1 wird mit einer Kraft F gegen die Probe 2 gedrückt, deren elastische Eigenschaften durch das Indentationsmodul $M_s$ gekennzeichnet sind. Der Durchmesser der Kontaktfläche beträgt wie dargestellt 2*a* bzw. es resultiert eine kreisförmige Kontaktfläche mit einem Durchmesser 2*a*, wobei ein resultierender Kontaktradius *a* sehr viel kleiner als der Radius *R* ist.

Zum Kalibrieren wird hierbei die Spitze 1 mit einer Normalkraft *F* auf die Referenzprobe 2 gedrückt, die das Indentationsmodul $M_{ref}$ aufweist. Die resultierende Kontaktsteifigkeit $k_{ref}^*$ ist durch die Kontaktresonanz bestimmt und kann anhand der folgenden Formel ermittelt werden sowie benutzt werden, um Informationen über den Radius der Spitze 1 zu erhalten: $k_{ref}^* = \sqrt[3]{6RFE_{ref}^{*2}}$ . $E_{ref}$ ist hierbei das reduzierte Elastizitätsmodul der Spitze 1 und der Probe 2 und ist definiert durch: $\frac{1}{E_{ref}^*} = \frac{1}{M_{tip}} + \frac{1}{M_{ref}}$ .

Nachdem die Kontaktsteifigkeit für die gegebene Kraft F einmal ermittelt wurde, wird die Spitze 1 bei einer Probe 3 mit unbekanntem Indentationsmodul $M_s$ verwendet. Hierbei wird die gleiche Kraft *F* wie bei den Kalibrierungsmessungen verwendet. Die sich ergebende Kontaktsteifigkeit ist dann: $k_{sam}^* = \sqrt[3]{6RFE_{sam}^{*2}}$ .

$E_{sam}{}^*$ ist das reduzierte Elastizitätsmodul der Spitze 1 und der unbekannten Probe 3 und gegeben durch:

$\frac{1}{E_{sam}^*} = \frac{1}{M_{tip}} + \frac{1}{M_{sam}}$ .

Die für die Kontaktsteifigkeiten erhaltenen Werte werden miteinander verglichen und das Indentationsmodul der Probe wie folgt berechnet:

$$\frac{k_{sam}^*}{k_{ref}^*} = \frac{\sqrt[3]{6RFE_{sam}^{*2}}}{\sqrt[3]{6RFE_{ref}^{*2}}} \xrightarrow{yields} E_{sam}^* = E_{ref}^* \sqrt{\frac{k_{sam}^{*3}}{k_{ref}^{*3}}}$$

$$M_{sam} = \left(\frac{1}{E_{sam}^*} - \frac{1}{M_{tip}}\right)^{-1}.$$

Dieser aus dem Stand der Technik bekannte Ansatz funktioniert, allerdings nur, falls das Indentationsmodul der Referenzprobe 2 ähnlich zu dem der unbekannten Probe 2 ist. Wie in U. Rabe, S. Amelio, M. Kopycinska, S. Hirsekorn, M. Kempf, M. Göken, and W. Arnold, Imaging and measurement of local mechanical properties by atomic force acoustic microscopy, Surface and Interface Analysis 33, 65 (2002); M. Kopycinska-Müller, On the elastic properties of nanocrystalline materials and the determination of elastic properties on a nanoscale using the atomic force acoustic microscopy technique, PhD thesis, Science and Technical Faculty III, Saarland University and IZFP report No. 050116-TW (2005) und M. Kopycinska-Müller, R. H. Geiss, D. C. Hurley, "Contact Mechanics and tip shape in AFM-based nanomechanical measurements", Ultramicroscopy 106, 466 (2006) beschrieben, sind die Resultate für R entweder abhängig von der aufgebrachten Kraft oder dem Indentationsmodul der Referenzprobe 2, wenn die Werte der Kontaktsteifigkeit, die auf der Referenzprobe 2 gemessen wurden, benutzt werden, um den Radius R zu berechnen.

Ebenfalls aus dem Stand der Technik ist bekannt, dass die Form der Spitze 1 in der Realität irgendwo zwischen einer Kugel und einer idealisierten flachen Oberfläche liegt. Dementsprechend wurde eine modifizierte Spitzenkalibrierung entwickelt (s. M. Kopycinska-Müller, A. Caron, S. Hirsekorn, U. Rabe, H. Natter, R. Hempelmann, R. Birringer, W. Arnold, Quantitative Evaluation of Elastic Properties of Nano-Crystalline Nickel Using Atomic Force Acoustic Microscopy, Z. Phys. Chem. 222, 471-498 (2008)).

Die Kontaktsteifigkeit der Spitze 1 wird in diesem Fall wie folgt definiert: $k^* = AE^{*(1-m)}F^m$. *A* ist eine Konstante, die von der Geometrie der Spitze 1 abhängt (und typischerweise gleich der Konstanten 8 ist), während m die Spitzengeometrie angibt. Für eine flache Spitze 1, die im Englischen auch als "flat punch" bezeichnet wird, gilt beispielsweise *m*=0 und *A*=2a, für eine sphärische Spitze m=1/3 und *A*=(6R)^(1/3).

Durch das bereits beschriebene Verfahren an der Referenzprobe 2 und der unbekannten Probe 3 folgt:

$$\frac{k_{sam}^*}{k_{ref}^*} = \frac{AE_{sam}^{*(1-m)}F^m}{AE_{ref}^{*(1-m)}F^m} \rightarrow E_{sam}^* = E_{ref}^* \left(\frac{k_{sam}^*}{k_{ref}^*}\right)^{1/1-m}$$

Hierdurch kann die vom Idealzustand abweichende Spitzengeometrie berücksichtigt werden, allerdings werden auch in diesem Fall die besten Ergebnisse erzielt, wenn die Referenzprobe 2 und die unbekannte Probe 3 in ihren Eigenschaften ähnlich sind.

Beim sogenannten "two reference sample approach" (z. B. beschrieben in G. Stan and W. Price, Review of Scientific Instruments 77, 103707 (2006), D. Passeri, M. Rossi, J. J. Vlassak, Ultramicroscopy 128, 32-41 (2013) oder A.M. Jacob, J. Buchwald, B. Rauschenbach, and S. G. Mayr, Nanoscale 6, 6898 (2014)) werden zwei Referenzproben 2 zum Bestimmen der Kontaktsteifigkeit verwendet. Die Kontaktsteifigkeit ergibt sich dann als Summe hintereinander angeordneter Federn, wie in Figur 2 in einer schematischen Ansicht dargestellt. Wiederkehrende Merkmale sind in dieser Figur wie auch in den folgenden Figuren mit identischen Bezugszeichen versehen. In diesem Modell wird angenommen, dass die Spitzenform flach ist.

Die Kontaktsteifigkeit ergibt sich somit zu:

$$\frac{1}{k^*} = \frac{1}{k_{sam}} + \frac{1}{k_{tip}} = \frac{1}{2aM_{sam}} + \frac{1}{2aM_{tip}}.$$

Der Kehrwert (oder inverse Wert)der durch die Messung erhaltenen Kontaktsteifigkeit wird aufgetragen als Funktion des Kehrwerts des Indentationsmoduls der Probe 2. Durch eine lineare Ausgleichsrechnung kann der Kontaktradius a aus der Steigung einer erhaltenen Ausgleichsgeraden ermittelt werden. Aus dem y-Achsenabschnitt bzw. Ordinatenabschnitt der Ausgleichsgeraden ergibt sich die Spitzensteifigkeit und das Indentationsmodul der Spitze 1. Mit diesen Parametern kann dann das Indentationsmodul der unbekannten Probe 3 durch entsprechende Werte der Kontaktsteifigkeit berechnet werden.

In Figur 3 ist in einer den vorhergehenden Figuren entsprechenden Ansicht das Modell von Batog schematisch dargestellt. Wie in G.S. Batog, A. S. Baturin, V. S. Bormashov, and E. P. Sheshin, Technical Physics 51, 1084 (2006) beschrieben, wird bei diesem Modell angenommen, dass die Spannungsfelder nicht schnell verschwindend sind, sondern die Spitze 1 wesentlich beeinflussen. Die Spitzensteifigkeit nach dem Modell von Batog wird daher wie in Figur 3 angegeben beschrieben als

$$\frac{1}{k^*} = \frac{1}{k_{sam}} + \frac{1}{k_{tip}} = \frac{1}{2aM_{sam}} + \frac{1}{0.611aE_{tip}}.$$

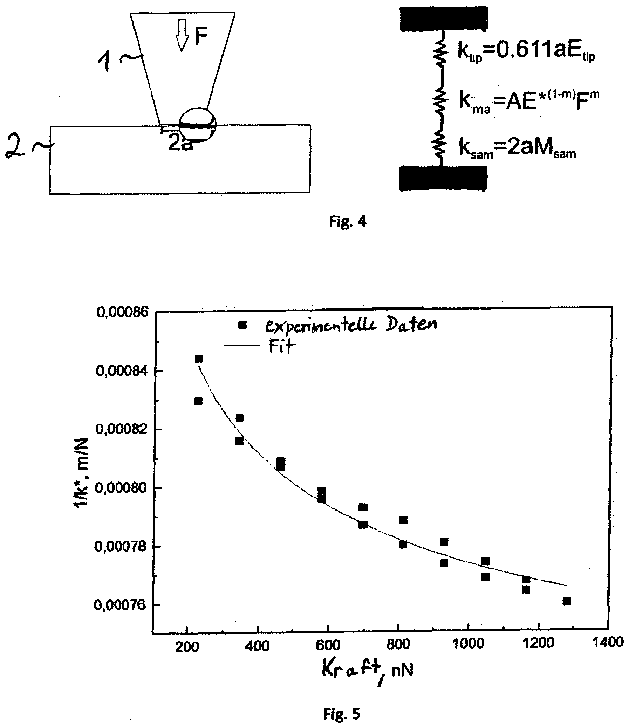

Figur 4 zeigt in einer schematischen, den Figuren 1 bis 3 entsprechenden Ansicht den erfindungsgemäßen Ansatz zur Kalibrierung der Spitze 1. Die Oberflächenrauheit bzw. -unebenheit der Spitze 1 wird nun als zusätzliche Feder im Modell berücksichtigt, die mit den weiteren Federn seriell verbunden ist. Wie in M. Kopycinska-Müller, M. Kopycinska-Müller, J. Gluch, B. Köhler "Study of mechanical behavior of AFM silicon tips under mechanical load", Nanotechnology 27 (2016), 454001 beschrieben, kann die Spitze 1 des Rasterkraftmikroskops als flacher Stempel (flat punch) mit abgerundeten Ecken beschrieben werden. Aus hochaufgelösten Transmissionselektronenmikroskpieaufnahmen ist allerdings bekannt, dass diese Spitzenoberfläche nicht perfekt glatt ist, sondern eine sub-nm-Rauigkeit aufweist. Wird davon ausgegangen, dass auch die Oberfläche der Probe 2 wenigstens eine derartige Rauigkeit zeigt, können die Oberflächen als miteinander gefaltet angesehen werden und ein sich einstellender Kontakt als Summe der Kontakte dargestellt werden.

Die effektive Steifigkeit des Spitzen-Proben-Kontakts im Nanobereich kann dann beschrieben werden als:

$$\frac{1}{k^*} = \frac{1}{k_{sam}} + \frac{1}{k_{tip}} + \frac{1}{k_{ma}} = \frac{1}{2aM_{sam}} + \frac{1}{0.611aE_{tip}} + \frac{1}{AE_{sam}^{*2/3}F^{1/3}}.$$

$k_{ma}$ ist die Steifigkeit, die sich aus dem Kontakt der Unebenheiten ergibt (und die Summe der Rauigkeiten aus den einzelnen Rauigkeiten ist) und die Konstante A bzw. B wird definiert als $A = \sqrt[3]{6R_{eff}}$, wobei $R_{eff}$ der äquivalente Radius ist, der den realen durch mehrfache Unebenheiten gekennzeichneten Kontaktbereich ergeben würde. Das heißt insbesondere, dass jede der Rauigkeiten als perfekte Kugel angesehen wird und mit der Oberfläche der Probe wechselwirkt. Jede dieser Wechselwirkungen kann durch eine individuelle Kontaktsteifigkeit beschrieben werden. Durch Aufsummieren dieser Kontaktsteifigkeiten ergibt sich eine Steifigkeit die einer entsprechend größeren Kugel mit Radius $R_{eff}$ entspricht.

Angewandt auf die Kontaktsteifigkeit, die sich aus AFAM-Messungen ergibt, erhält man überraschenderweise:

1. einen unabhängig von der Auswahl der Referenzprobe 2 innerhalb der Messungen konsistenten Kontaktradius (bzw. Kontaktfläche)
2. korrekte Werte für das Indentationsmodul der Spitze 1
3. Werte für das Indentationsmodul der Probe 3, die in sehr guter Übereinstimmung sowohl mit Literaturwerten als auch mit Messwerten Nanoindentationstests sind

4. eine Erklärung für das Ansteigen der Kontaktsteifigkeit als Funktion der aufgebrachten Kraft trotz des flachen Charakters der Spitze 1

Zudem kommt das Verfahren mit nur einer Referenzprobe 2 aus, allerdings sollte das Indentationsmodul der Referenzprobe 2 und der Probe 3 mit unbekannten mechanischen Eigenschaften nicht mehr als 150 GPa auseinander liegen.

Beispielhaft sieht das Verfahren zum Kalibrieren der Spitze 1 des Rasterkraftmikroskops wie folgt aus:

1. Zunächst wird eine Steifigkeit-Kraft-Kurve (load-unload-curve) mit ansteigender und abfallender Kraft aufgenommen. Das gleiche Prinzip kann auch auf Messungen angewandt werden, bei denen die Kontaktsteifigkeit bestimmt wird als Funktion der sich ergebenden Indentationstiefe, beispielsweise bei Nanoindentationsmessungen.

2. Bei AFAM und CR-FM-Messungen wird die aufgebrachte Kraft geändert durch Ändern der Balkenbiegung entsprechend dem Hookeschen Gesetz $F = k_c d$, wobei $k_c$ die Federkonstante des Balkens (der auch als Cantilever bezeichnet wird) und d die bekannte Biegung ist. Um die aufgebrachte Kraft zu bestimmen, werden daher Informationen über bzw. die Werte von $k_c$ benötigt. Bei dem vorliegenden Verfahren kann hierfür beispielsweise eine

$$f_1 = 0{,}162 \sqrt{\frac{E\,T}{\rho\,L^2}}$$

Kombination der Bernoulli-Gleichung , wobei $\rho$ die Dichte und $T$ die Dicke sowie $L$ die Länge des Cantilevers bezeichnet ($E$ ist wie gehabt das Elastizitätsmodul), und der Saders-Methode angewandt werden. Die Werte der Kontaktsteifigkeit, die in sogenannten "AFAM single point spectroscopy measurements" erhalten wurden, können dann als Funktion der aufgebrachten Kraft wiedergegeben werden.

3. Die Steifigkeit-Kraft-Kurve wird wie folgt neu berechnet: $k^*(F) \Rightarrow \frac{1}{k^*}(F)$

$$\frac{1}{k^*} = \frac{1}{K} + \frac{1}{B E_{sam}^{*2/3} F^{1/3}}$$

4. Unter Annahme der Gleichung kann ein Fit, also eine Ausgleichsrechnung, an die experimentell erhaltenen Daten durchgeführt werden, um die beiden unbekannten Parameter $K$ und $B$ zu erhalten. $K$ ist die bereits aus dem Modell von Batog bekannte Kontaktsteifigkeit. Aus der makroskopischen Steifigkeit wird dann

$$a = K \left( \frac{1}{2M_{ref}} + \frac{1}{0.611 E_{tip}} \right)$$

bzw. der Radius der Spitze 1 berechnet als . Referenzwerte oder Literaturwerte für $M_{ref}$ und das Elastizitätsmodul der Spitze 1 werden bei der Berechnung herangezogen. Außerdem wird die Steifigkeit der Spitze 1 $k_{tip}$ berechnet. Die Kalibrierung der Spitze 1 ist beendet, wenn der Kontaktradius, die resultierende Spitzensteifigkeit und der Parameter B erhalten wurden.

Figur 5 zeigt ein Diagramm mit experimentellen Daten und einer entsprechend dem beschriebenen Verfahren durchgeführten Ausgleichsrechnung.

Um unbekannte Proben 3, d. h. Proben mit unbekannten mechanischen Eigenschaften, zu vermessen, kann die wie beschrieben kalibrierte Spitze 1 wie folgt eingesetzt werden:

1. Messen der Kontaktsteifigkeit als Funktion einer ansteigenden und abnehmenden Kraft, die auf die unbekannte Probe 3 wirkt. Die Parameter der Messung sollten hierbei so gewählt werden, dass die sich ergebende Steifigkeit-Kraft-Kurve reversibel ist.

2. Die Steifigkeit-Kraft-Kurve wird wie folgt neu berechnet: $k^*(F) \Rightarrow \frac{1}{k^*}(F)$

3. Unter Zuhilfenahme der Parameter a und $k_{tip}$ aus der Kalibrierung der Spitze 1 wird eine Ausgleichsrechnung durchgeführt. Diese Ausgleichsrechnung führt zu den Werten für das Indentationsmodul der untersuchten Probe 3. In den meisten Fällen kann der Parameter B, der während der Kalibrierung mit der Referenzprobe 2 bestimmt wurde, auch bei der unbekannten Probe 3 verwendet werden.

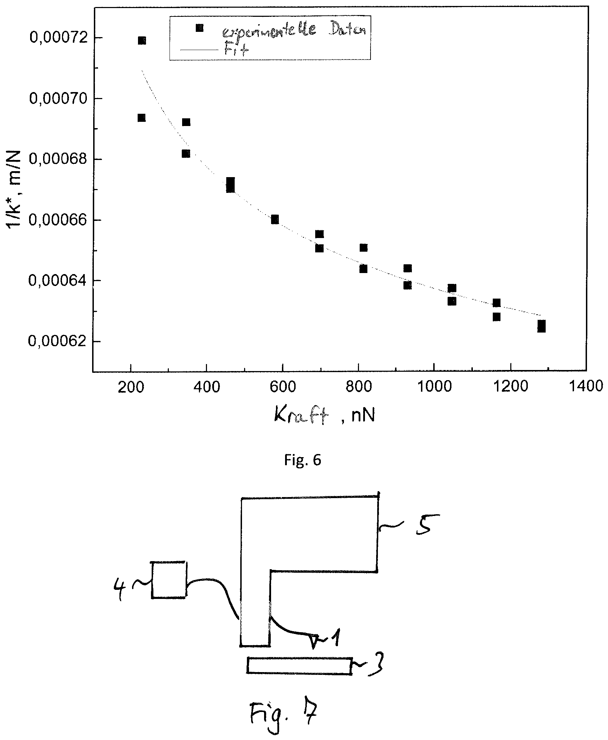

Figur 6 zeigt in einer Figur 5 entsprechenden Ansicht entsprechende Daten in einem Diagramm. Als Parameter für die Ausgleichsrechnung wurden ein Kontaktradius von 29 nm und eine Spitzensteifigkeit von 2303 N/m verwendet. Die experimentellen Daten wurden auf Silizium <111> gemessen. Aus der Ausgleichsrechnung folgt für das Indentationsmodul der Probe 3 ein Wert von 192 $\pm$ 14 GPa, ein Wert, der sehr gut mit dem erwarteten Wert von 175 GPa übereinstimmt.

In Figur 7 ist in einer stark vereinfachten und schematischen Darstellung die Spitze 1 über der unbekannten Probe 3 gezeigt. Die Spitze 1 ist Teil eines Rasterkraftmikroskops 5, das über eine Steuereinheit 4 angesteuert wird. In der Steuereinheit 4, beispielsweise einem Computer, ist ein Computerprogrammprodukt enthalten, das eine auf einem maschinenlesbaren Träger gespeicherte Befehlsfolge zum Durchführen des beschriebenen Verfahrens und bzw. oder zum Ansteuern des Rasterkraftmikroskops 5 aufweist, wenn das Computerprogrammprodukt auf der Steuereinheit 4 als einer Recheneinheit abläuft.

Mit dem beschriebenen Verfahren kann somit unter Benutzen nur einer einzigen Referenzprobe 2 eine zuverlässige Kalibrierung erfolgen, sofern das Indentationsmodul der Referenzprobe 2 und das Indentationsmodul der zu untersuchenden Probe 3 innerhalb eines (sehr großen) Bereichs einander entsprechen. Durch Verwenden eines einfachen Modells mit drei Federn, die über den Kontaktbereich verbunden sind und von denen eine als Äquivalent für die Spitzensteifigkeit dient, die zweite die Probensteifigkeit kennzeichnet, und die dritte Feder die aufsummierten Rauigkeiten darstellt, kann in einfacher Weise die Kalibrierung durchgeführt werden und liefert trotz des relativ einfachen Modells sehr gute Ergebnisse.

Die Erfindung wird durch die beigefügten Ansprüche definiert.

## Patentansprüche

1. Verfahren zum Kalibrieren einer Spitze (1) eines Rasterkraftmikroskops, bei dem

   zunächst eine Steifigkeit-Kraftkurve (k*(F)) einer Referenzprobe (2) mit bekannten mechanischen Eigenschaften mit der zu kalibrierenden Spitze (1) aufgenommen wird,
   anschließend der Kehrwert (1/k*(F)) der Steifigkeit-Kraftkurve (k*(F)) gebildet wird, wobei
   der Kehrwert (1/k*(F)) als eine Summe aus dem Kehrwert der Steifigkeit (K) nach dem Modell von Batog und einem weiteren Kehrwert der Steifigkeit ($k_{ma}$), der von Oberflächenunebenheiten der Spitze (1) abhängt, gebildet wird sowie
   eine Ausgleichsrechnung mit dem Kehrwert der aufgenommenen Steifigkeit-Kraftkurve (1/k*(F)) mit der Steifigkeit (K) nach dem Modell von Batog und einem Vorfaktor (B), der in den Kehrwert der Steifigkeit ($k_{ma}$), der von Oberflächenunebenheiten der Spitze (1) abhängt, eingeht, als Parameter erstellt wird und abschließend ein Radius der Spitze (1) und die Spitzensteifigkeit ($k_{tip}$) berechnet wird.

2. Verfahren nach Anspruch 1, **dadurch gekennzeichnet, dass** die Steifigkeit ($k_{ma}$), die von Oberflächenunebenheiten der Spitze abhängt, anhand einer Formel $\frac{1}{k_{ma}} = \frac{1}{BE_{sam}^{*(1-m)}F^m}$, vorzugsweise anhand einer Formel $\frac{1}{k_{ma}} = \frac{1}{BE_{sam}^{*2/3}F^{1/3}}$ berechnet wird.

3. Verfahren nach Anspruch 1 oder Anspruch 2, **dadurch gekennzeichnet, dass** die Kontaktfläche mittels einer Formel $a = K\left(\frac{1}{2M_{ref}} + \frac{1}{0.611E_{tip}}\right)$ berechnet wird.

4. Verfahren nach einem der vorhergehenden Ansprüche, **dadurch gekennzeichnet, dass** die Steifigkeit-Kraftkurve (k*(F)) an einer einzigen Referenzprobe (2) gemessen und ausgewertet wird.

5. Verfahren nach einem der vorhergehenden Ansprüche, **dadurch gekennzeichnet, dass** eine Kontaktsteifigkeit (k) als Funktion der aufgebrachten Kraft (F) unter Zugrundelegung des Hookeschen Gesetzes berechnet wird, bevor der Kehrwert (1/k*(F)) der Steifigkeit-Kraftkurve (k*(F)) gebildet wird.

6. Verfahren nach einem der vorhergehenden Ansprüche, **dadurch gekennzeichnet, dass** aus der Steifigkeit-Kraftkurve (k*(F)) eine Geometrie der Spitze (1) bestimmt wird.

7. Verfahren nach einem der vorhergehenden Ansprüche, **dadurch gekennzeichnet, dass** nach dem Kalibrieren eine unbekannte Probe (3) mit der kalibrierten Spitze (1) untersucht wird, wobei eine Steifigkeit-Kraftkurve (k*(F)) der unbekannten Probe aufgenommen wird, ein Kehrwert der Steifigkeit-Kraftkurve (1/k*(F)) und unter Benutzen der Kalibrierung eine Ausgleichsrechnung des Kehrwerts der Steifigkeit-Kraftkurve (1/k*(F)) durchgeführt wird.

8. Vorrichtung, die ausgebildet ist zum Durchführen des Verfahrens nach einem der Ansprüche 1-7, und die mit einem Rasterkraftmikroskop (5), das ausgebildet ist zum Aufnehmen der Steifigkeit-Kraftkurve (k*(F)) einer Referenzprobe (2) mit bekannten mechanischen Eigenschaften mit der zu kalibrierenden Spitze (1), und einer Recheneinheit (4) gebildet ist, die ausgebildet ist zum Bilden des Kehrwerts der Steifigkeit-Kraftkurve (1/k*(F)) nach dem Aufnehmen der Steifigkeit-Kraftkurve (k*(F)), wobei der Kehrwert (1/k*(F)) als die Summe aus dem Kehrwert der Steifigkeit (K) nach dem Modell von Batog und dem weiteren Kehrwert der Steifigkeit ($k_{ma}$), der von Oberflächenunebenheiten der Spitze (1) abhängt, gebildet ist, und ausgebildet ist zum Erstellen der Ausgleichsrechnung mit dem Kehrwert der aufgenommenen Steifigkeit-Kraftkurve (1/k*(F)) mit der Steifigkeit (K) nach dem Modell von Batog und dem Vorfaktor (B), der in den Kehrwert der Steifigkeit ($k_{ma}$), der von Oberflächenunebenheiten der Spitze (1) abhängt, eingeht, als Parameter, sowie ausgebildet ist zum Berechnen der Kontaktfläche (2a) und der Spitzensteifigkeit ($k_{tip}$).

9. Computerprogrammprodukt, enthaltend eine auf einem maschinenlesbaren Träger gespeicherte Befehlsfolge zum Durchführen des Verfahrens nach einem der Ansprüche 1-7 und/oder zum Ansteuern der Vorrichtung nach Anspruch 8, wenn das Computerprogrammprodukt auf einer Recheneinheit abläuft.

## Claims

1. A method for calibrating a tip (1) of a scanning force microscope,

    initially, a stiffness-force curve (k*(F)) of a reference sample (2) having known mechanical properties being recorded by way of the tip (1) to be calibrated;
    thereafter the reciprocal (1/k*(F)) of the stiffness-force curve (k*(F)) being found,
    the reciprocal value (1/k*(F)) being found as a sum of the reciprocal of the stiffness (K) according to Batog's model and a further reciprocal value of the stiffness ($k_{ma}$), which depends on surface irregularities of the tip (1); and
    a calculus of observations being created using the reciprocal of the recorded stiffness-force curve (1/k*(F)) having the stiffness (K) according to Batog's model and a pre-factor (B), which is incorporated in the reciprocal of the stiffness ($k_{ma}$), which is dependent on surface irregularities of the tip (1), as a parameter; and thereafter a radius of the tip (1) and the tip stiffness ($k_{tip}$) being calculated.

2. The method according to claim 1, **characterized in that** the stiffness ($k_{ma}$), which is dependent on surface irregularities of the tip, is calculated based on a formula $\frac{1}{k_{ma}} = \frac{1}{BE_{sam}^{*(1-m)}F^m}$ preferably based on a formula $\frac{1}{k_{ma}} = \frac{1}{BE_{sam}^{*2/3}F^{1/3}}$ .

3. The method according to claim 1 or claim 2, **characterized in that** the contact surface is calculated by means of a formula $a = K\left(\frac{1}{2M_{ref}} + \frac{1}{0.611E_{tip}}\right)$ .

4. The method according to any one of the preceding claims, **characterized in that** the stiffness-force curve (k*(F)) is measured and evaluated using a single reference sample (2).

5. The method according to any one of the preceding claims, **characterized in that** a contact stiffness (k) is calculated as a function of the applied force (F) based on Hooke's law before the reciprocal (1/k*(F)) of the stiffness-force curve (k*(F)) is found.

6. The method according to any one of the preceding claims, **characterized in that** a geometry of the tip (1) is determined from the stiffness-force curve (k*(F)).

7. The method according to any one of the preceding claims, **characterized in that**, after the calibration, an unknown sample (3) is examined using the calibrated tip (1), a stiffness-force curve (k*(F)) of the unknown sample being recorded, a reciprocal of the stiffness-force curve (1/k*(F)) and, using the calibration, a calculus of observations of the reciprocal of the stiffness-force curve (1/k*(F)) being carried out.

8. A device, which is designed to carry out the method according to any one of claims 1 to 7 and which is formed of a scanning force microscope (5), which is designed to record the stiffness-force curve (k*(F)) of a reference sample (2) having known mechanical properties by means of the tip (1) to be calibrated, and a processing unit (4), which is designed to find the reciprocal of the stiffness-force curve (1/k*(F)) after the stiffness-force curve (k*(FF)) has been recorded, the reciprocal (1/k*(F)) being found as the sum of the reciprocal of the stiffness (K) according to Batog's model and the further reciprocal of the stiffness ($k_{ma}$), which depends on surface irregularities of the tip (1), and which is designed to create the calculus of observations using the reciprocal of the recorded stiffness-force curve (1/k*(F)) having the stiffness (K) according to Batog's model and the pre-factor (B), which is incorporated in the reciprocal of the stiffness ($k_{ma}$), which depends on surface irregularities of the tip (1), as a parameter, and designed to calculate the contact surface (2a) and the tip stiffness ($k_{tip}$).

9. A computer program product, including a command sequence stored on a machine-readable carrier for carrying out the method according to any one of claims 1 to 7 and/or for activating the device according to claim 8 when the computer program product runs on a processing unit.

**Revendications**

1. Procédé de calibrage d'une pointe (1) d'un microscope à force atomique, dans lequel

une courbe rigidité-force (k*(F)) d'un échantillon de référence (2) avec des propriétés mécaniques connues est d'abord enregistrée avec la pointe (1) à calibrer,
la valeur réciproque (1/k*(F)) de la courbe rigidité-force (k*(F)) est ensuite formée, dans lequel
la valeur réciproque (1/k*(F)) est formée sous la forme d'une somme de la valeur réciproque de la rigidité (K) selon le modèle de Batog et une autre valeur réciproque de la rigidité ($k_{ma}$), qui dépend des irrégularités de la surface de la pointe (1), et
un calcul de compensation avec la valeur réciproque de la courbe rigidité-force (1/k*(F)) enregistrée est effectué avec la rigidité (K) selon le modèle de Batog et un pré-facteur (B), qui est intégré dans la valeur réciproque de la rigidité ($k_{ma}$), qui dépend des irrégularités de la surface de la pointe (1), est établi en tant que paramètre, enfin un rayon de la pointe (1) et la rigidité de la pointe ($k_{tip}$) sont calculés.

2. Procédé selon la revendication 1, **caractérisé en ce que** la rigidité ($k_{ma}$), qui dépend des irrégularités de la surface de la pointe, est calculé à l'aide d'une formule $\frac{1}{k_{ma}} = \frac{1}{BE_{sam}^{*(1-m)}F^m}$, de préférence à l'aide d'une formule $\frac{1}{k_{ma}} = \frac{1}{BE_{sam}^{*2/3}F^{1/3}}$.

3. Procédé selon la revendication 1 ou 2, **caractérisé en ce que** la surface de contact est calculée au moyen d'une formule $a = K\left(\frac{1}{2M_{ref}} + \frac{1}{0.611E_{tip}}\right)$.

4. Procédé selon l'une des revendications précédentes, **caractérisé en ce que** la courbe rigidité-force (k*(F)) est mesurée et analysée sur un seul échantillon de référence (2).

5. Procédé selon l'une des revendications précédentes, **caractérisé en ce qu'**une rigidité de contact (k) est calculée en fonction de la force (F) appliquée sur la base de la loi de Hooke, avant que la valeur réciproque (1/(k*(F)) de la courbe rigidité-force (k*(F)) ne soit formée.

6. Procédé selon l'une des revendications précédentes, **caractérisé en ce que**, à partir de la courbe rigidité-force (k*(F)), une géométrie de la pointe (1) est déterminée.

7. Procédé selon l'une des revendications précédentes, **caractérisé en ce que**, après le calibrage, un échantillon inconnu (3) est examiné avec la pointe calibrée (1), dans lequel une courbe rigidité-force (k*(F)) de l'échantillon inconnu est enregistrée, une valeur réciproque de la courbe rigidité-force (1/k*(F)) est formée et, à l'aide du calibrage, un calcul de compensation de la valeur réciproque de la courbe rigidité-force (1/(k*(F)) est effectué.

8. Dispositif conçu pour l'exécution du procédé selon l'une des revendications 1 à 7 et avec un microscope à force atomique (5), qui est conçu pour l'enregistrement de la courbe rigidité-force (k*(F)) d'un échantillon de référence (2) avec des propriétés mécaniques connues avec la pointe à calibrer (1) et une unité de calcul (4) est formée, qui est conçue pour la formation de la valeur réciproque de la courbe rigidité-force (1/(k*(F)) après l'enregistrement de la courbe rigidité-force (k*(F)), dans lequel la valeur réciproque (1/(k*(F)) est formée en tant que somme de la valeur réciproque de la rigidité (K) selon le modèle de Batog et de l'autre valeur réciproque ($k_{ma}$), qui dépend des irrégularités de la surface de la pointe (1), et qui est conçu pour l'établissement du calcul de compensation avec la valeur réciproque de la courbe rigidité-force enregistrée (1/(k*(F)) avec la rigidité (K) selon le modèle de Batog et le préfacteur (B), qui est intégré dans la valeur réciproque de la rigidité ($k_{ma}$), qui dépend des irrégularités de la surface de la pointe (1), en tant que paramètre, et est conçu également pour le calcul de la surface de contact (2a) et de la rigidité de la pointe ($k_{tip}$).

9. Produit de programme informatique contenant une suite d'instructions enregistrées sur un support lisible par une machine, pour l'exécution du procédé selon l'une des revendications 1 à 7 et/ou pour le contrôle du dispositif selon la revendication 8, lorsque le produit de programme informatique est exécuté sur une unité de calcul.

Fig. 1

Stand der Technik

Fig. 2

Stand der Technik

$$k_{tip}=2aM_{tip}$$

$$k_{sam}=2aM_{sam}$$

Fig. 3

Stand der Technik

$$k_{tip}=0.611aE_{tip}$$

$$k_{sam}=2aM_{sam}$$

$k_{tip}=0.611aE_{tip}$

$k_{ma}=AE^{*(1-m)}F^{m}$

$k_{sam}=2aM_{sam}$

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Contact stiffness calibration platform for nanomechanical property measurements with contact resonance atomic force microscoe. **ROSENBERGER M. R. et al.** 2015 Transducers - 2015 18th International Conference on Solid-State Sensors, Actuators and Microsystems (TRANSDUCERS). IEEE, 21. Juni 2015, 1235-1238
- **M. KOPYCINSKA-MÜLLER ; R.H. GEISS ; D.C. HURLEY.** Contact Mechanics and tip shape in AFM-based nanomechanical measurements. *Ultramicroscopy,* 2006, vol. 106, 466
- Science and Technical Faculty III. Saarland University, 2005
- **M. KOPYCINSKA-MÜLLER ; R. H. GEISS ; D. C. HURLEY.** Contact Mechanics and tip shape in AFM-based nanomechanical measurements. *Ultramicroscopy,* 2006, vol. 106 (466

- **M. KOPYCINSKA-MÜLLER ; A. CARON ; S. HIRSEKORN ; U. RABE ; H. NATTER ; R. HEMPELMANN ; R. BIRRINGER ; W. ARNOLD.** Quantitative Evaluation of Elastic Properties of Nano-Crystalline Nickel Using Atomic Force Acoustic Microscopy. *Z. Phys. Chem.,* 2008, vol. 222, 471-498
- **G. STAN ; W. PRICE.** *Review of Scientific Instruments,* 2006, vol. 77, 103707
- **D. PASSERI ; M. ROSSI ; J. J. VLASSAK.** *Ultramicroscopy,* 2013, vol. 128, 32-41
- **A.M. JACOB ; J. BUCHWALD ; B. RAUSCHENBACH ; S. G. MAYR.** *Nanoscale,* 2014, vol. 6, 6898
- **G.S. BATOG ; A. S. BATURIN ; V. S. BORMASHOV ; E. P. SHESHIN.** *Technical Physics,* 2006, vol. 51, 1084
- **M. KOPYCINSKA-MÜLLER ; M. KOPYCINSKA-MÜLLER ; J. GLUCH ; B. KÖHLER.** Study of mechanical behavior of AFM silicon tips under mechanical load. *Nanotechnology,* 2016, vol. 27, 454001